# EUROPEAN PATENT APPLICATION

(11) **EP 2 677 409 A1**
(43) Date of publication of application: **25.12.2013**
(21) Application number: 12166217.5
(22) Date of filing: 30.04.2012
(51) Int. Cl.: G06F 3/048, G06F 3/0488

(54) **Method and apparatus pertaining to stylus-based responses**

(71) Applicant: BlackBerry Limited, Waterloo, ON N2K 0A7 (CA)
(72) Inventor: Theimer, Wolfgang Michael, 44799 Bochum (DE); Eliashevsky, Ilia Alexander, Connecticut, 06461 (US); Hymel, James Allen, Waterloo, Ontario N2L 3W8 (CA); Wilson, Roy Robert George, Kanata, Ontario K2K 3K1 (CA); Lewin, Mathias, Malmö 21140 (SE)
(74) Representative: Greenaway, Martin William

(57) **Abstract**

A control circuit detects an initial interaction between a touch-sensitive surface and a stylus and responsively automatically displays a corresponding fresh electronic ink writing façade. By one approach the initial interaction can comprise a non-touching interaction. The fresh electronic ink writing façade can comprise a representation of an unmarked sheet of paper. If desired, upon detecting the initial interaction, the control circuit can first determine whether an electronic ink writing façade already exists for the presently-displayed content. When true, the control circuit can automatically display at least a portion of the already existing electronic ink writing façade. Otherwise, the control circuit can provide the aforementioned fresh electronic ink writing façade.

## Description

### Field of Technology

The present disclosure relates generally to electronic devices and more particularly to touch-sensitive surfaces that operate in conjunction with a stylus.

### Background

Many electronic devices include a touch-sensitive surface. Many such touch-sensitive surfaces respond to fingertip touches, some require the use of a specific stylus, and some will support both interface modalities. A stylus typically comprises a pencil-like hand-held implement having at least one of its ends shaped to have a (typically) small point-of-contact with a touch-sensitive surface. In some cases the stylus is a very simple device (such as an elongated plastic shaft) while in other cases metals or a variety of materials may be utilized. By one approach the stylus (or at least its tip) is comprised of a material and electronics that are capacitively detectable by a properly-configured surface.

Many users prefer an implement-free approach to interacting with a touch-sensitive surface. That said, a stylus can permit improved contact resolution as compared to a human fingertip. Working with a stylus can also resonate strongly with many users who find they can draw with a stylus using the same training, experience, and mechanical memory they have developed using traditional handheld writing instruments such as pencils and pens. Accordingly, as noted above, some electronic devices will support both a stylus-based interface modality and a non-stylus-based interface modality.

Switching between such modes of operation, however, can lead to problems. At worst, a dual-mode of operation can lead to confusion and error regarding what features are selected and how, in fact, one switches between such modes of operation.

### Brief Description of the Drawings

FIG. 1 is a flow diagram in accordance with the disclosure.

FIG. 2 is a block diagram in accordance with the disclosure.

FIG. 3 is a top plan schematic view in accordance with the disclosure.

FIG. 4 is a perspective view in accordance with the disclosure.

FIG. 5 is a top plan schematic view in accordance with the disclosure.

FIG. 6 is a top plan schematic view in accordance with the disclosure.

FIG. 7 is a top plan schematic view in accordance with the disclosure.

FIG. 8 is a top plan schematic view in accordance with the disclosure.

FIG. 9 is a top plan schematic view in accordance with the disclosure.

FIG. 10 is a top plan schematic view in accordance with the disclosure.

### Detailed Description

The following describes an apparatus and method pertaining to detecting an initial interaction between a touch-sensitive surface and a stylus and responsively automatically displaying a corresponding fresh electronic ink writing façade. By one approach that initial interaction can comprise a non-touching interaction (as may occur, for example, when a portion of the stylus is within a predetermined distance of the touch-sensitive surface but not actually touching the touch-sensitive surface).

By one approach the aforementioned fresh electronic ink writing façade comprises a representation of an unmarked sheet of paper. The relative size of this paper representation as compared to the size of the touch-sensitive surface can vary as desired but can, for example, occupy substantially all of the touch-sensitive surface if desired.

If desired, upon detecting that aforementioned initial interaction, the corresponding control circuit can first determine whether an electronic ink writing façade already exists for the presently-displayed content. When true, the control circuit can automatically display at least a portion of the already existing electronic ink writing façade (along with some or all of the previously entered user content that might appear on that writing façade). Otherwise, the control circuit can provide the aforementioned fresh electronic ink writing façade.

These teachings are highly flexible in practice and will accommodate a wide variety of different types and sizes of touch-sensitive surfaces and styli. The concepts set forth herein are also easily implemented and can readily serve to further leverage the continued utility of numerous existing designs in these regards. So configured, the intuitive ease by which a user utilizes a stylus from time to time when working with an electronic device having a touch-sensitive surface can be greatly improved. This, in turn, can lead to greater user satisfaction and also improved productivity.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

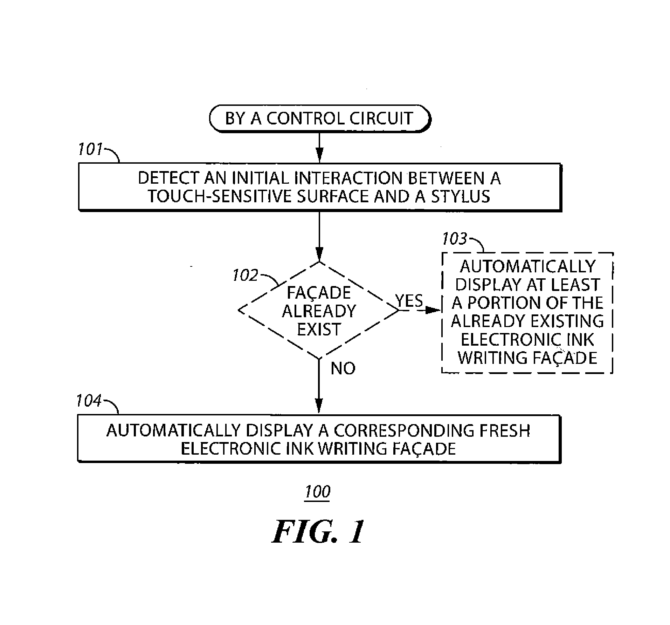

FIG. 1 presents an illustrative process 100 that corresponds to many of the present teachings. For the sake of illustration it will be presumed that a control circuit carries out this process 100.

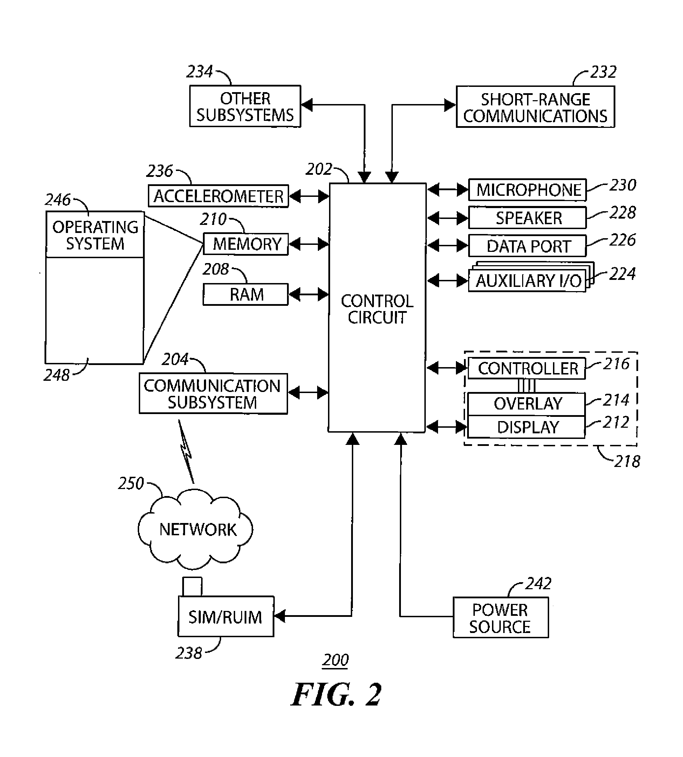

With reference momentarily to FIG. 2, and by way of further illustrative example and without intending any limitations in these regards, by one approach this control circuit 202 comprises a part of a portable electronic device 200 and serves to control the overall operation of the portable electronic device 200. Communication functions, including data and voice communications, are performed through a communication subsystem 204. The communication subsystem receives messages from and sends messages to a wireless network 250. The wireless network 250 may be any type of wireless network, including, but not limited to, data wireless networks, voice wireless networks, and networks that support both voice and data communications. A power source 242, such as one or more rechargeable batteries or a port to an external power supply, powers the electronic device 200.

The control circuit 202 interacts with other elements, such as Random Access Memory (RAM) 208, memory 210, a display 212 with a touch-sensitive overlay/surface 214 operably coupled to an electronic controller 216 that together comprise an optional touch-sensitive display 218, one or more actuators 220, one or more force sensors 222, an auxiliary input/output (I/O) subsystem 224, a data port 226, a speaker 228, a microphone 230, a short-range communication subsystem 232, and other device subsystems 234 of choice (such as, for example, one or more stylus-proximity detectors).

One or more user interfaces are provided. Input via a graphical user interface is provided via the touch-sensitive overlay 214. The control circuit 202 interacts with the touch-sensitive overlay 214 via the electronic controller 216. Information, such as text, characters, symbols, images, icons, and other items that may be displayed or rendered on a portable electronic device, is displayed on the touch-sensitive display (also referred to herein as a touch-sensitive surface) 218 via the control circuit 202.

The control circuit 202 may interact with an accelerometer 236 that may be utilized to detect direction of gravitational forces or gravity-induced reaction forces.

To identify a subscriber for network access, the portable electronic device 200 may utilize a Subscriber Identity Module or a Removable User Identity Module (SIM/RUIM) card 238 for communication with a network, such as the wireless network 250. Alternatively, user identification information may be programmed into the memory 210.

The portable electronic device 200 includes an operating system 246 and software programs, applications, or components 248 that are executed by the control circuit 202 and are typically stored in a persistent, updatable store such as the memory 210. Additional applications or programs may be loaded onto the portable electronic device 200 through the wireless network 250, the auxiliary I/O subsystem 224, the data port 226, the short-range communications subsystem 232, or any other suitable subsystem 234. The memory 210 may comprise a non-transitory storage media that stores executable code that, when executed, carries out one or more of the functions or actions as described herein.

A received signal such as a text message, an e-mail message, or web page download is processed by the communication subsystem and input to the control circuit 202. The control circuit 202 processes the received signal for output to the display 212 and/or to the auxiliary I/O subsystem 224. A subscriber may generate data items, for example e-mail messages, which may be transmitted over the wireless network 250 through the communication subsystem. For voice communications, the overall operation of the portable electronic device is similar. The speaker 228 outputs audible information converted from electrical signals, and the microphone 230 converts audible information into electrical signals for processing.

The touch-sensitive display 218 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 214 and such a display may be particularly useful when further employed to detect the near (but not touching) proximity of a stylus in service of the present teachings. The overlay 214 may be an assembly of multiple layers in a stack including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

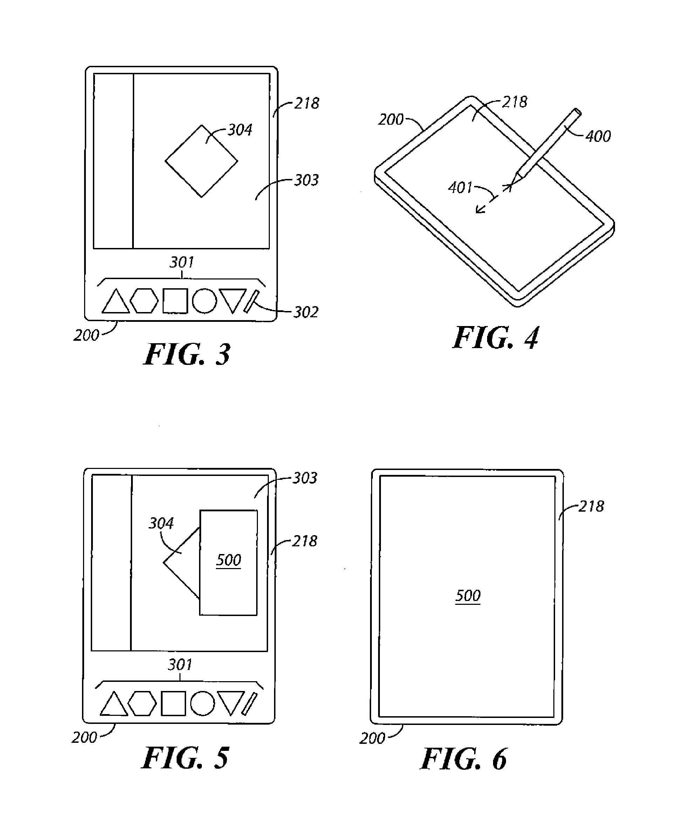

As shown in FIG. 3, and by way of further illustration, such an electronic device 200 can provide on its display 218 a plurality of user-selectable icons 30 that each correspond to a different application (such as, for example, a word-processing application, an email application, a social-networking application, and so forth) including, if desired, an icon 302 that can call up, for example one or more selectable properties as pertain to using a stylus. In this illustrative example the electronic device 200 supports both stylus-based interaction as well as non-stylus-based interaction and can differentiate between both types of input.

Typical of such an electronic device 200 the display 218 in this example includes an application-specific window 303 that presents application content 304 that particularly pertains to the presently-selected application. If the application is, for example, a so-called e-reader, this application content 304 might comprise the text of a book. If, on the other hand, the application is a browser, then this application content 304 might comprise the contents of a presently-visited website.

Referring now to FIGS. 1 and 4, this process 100 provides for detecting 101 an initial interaction between a touch-sensitive surface 218 and a stylus 400. As used herein, this reference to "initial" will be understood to refer to a first detected interaction following some period of no detected interaction. Accordingly, the "initial interaction" comprises the first temporal portion of a duration of time that covers a complete given interaction.

By one approach this detection of a first interaction comprises detecting a non-touching interaction such as, for example, a portion of the stylus 400 coming within a predetermined distance 401 of the touch-sensitive surface 218. By one approach, the detection of such proximity may rely upon capacitively-based sensing as is known in the art. An active stylus typically incorporates electronics that emit a strong capacitive signal and can be clearly distinguished from capacitive finger information.

As will be described in more detail below, this process 100 provides for responding to such a detected interaction by automatically displaying a fresh electronic ink writing façade. By one optional approach, however, this process 100 will accommodate also detecting 102 whether an electronic ink writing façade already exists for a presently-displayed context. For example, if the device presently displayed a particular page of an e-book, the control circuit 202 could determine whether an electronic ink writing façade had already been previously created in association with this e-book. If so, the control circuit 202 could respond by automatically displaying 103 at least a portion of the already existing electronic ink writing façade 500 as shown in FIG. 5.

In this illustrative example the displayed previously-established electronic ink writing façade 500 overlies a portion (but not all) of the application content 304. So configured, the electronic ink writing façade 500 serves as a kind of sticky note upon which the user can enter content as electronic ink via the aforementioned stylus 400. In this case, contacting the electronic ink writing façade 500 with the stylus 400 will cause a corresponding electronic ink mark to appear (this comprising the digital equivalent to placing a pencil tip atop a piece of paper). In this example, using the stylus 400 to contact the display 218 at other locations that are external to the electronic ink writing façade 500 will be interpreted instead as a tap, swipe, or the like as appropriate and not as the application of electronic ink.

So configured, a user can readily have access to, for example, previously entered handwritten annotation material while interacting with a wide variety of application materials by simply moving their stylus 400 into suitable proximity with the display 218.

In any event, when there is no already-existing electronic ink writing façade for a presently-display context (or when the process 100 does not include that consideration), the control circuit 202 then automatically displays 104 a corresponding fresh electronic ink writing façade 500. As used herein this reference to "fresh" refers to the fact that the electronic ink writing façade 500 does not yet include any user-entered content.

By one approach, and referring to FIG. 6, the electronic ink writing façade 500 can comprise a representation of an unmarked sheet of paper. This representation can be as simple and representational or as nuanced and visually realistic as may be desired to suit the needs and/or opportunities as tend to characterize a given application setting. For example, by one approach, this "sheet of paper" can simply comprise a white-colored rectangle. As another example and by another approach, this "sheet of paper" can have the visual appearance and texture of an off-white heavy-weight paper including, if desired, a watermark.

The size of the electronic ink writing façade 500 can vary as desired. As shown in FIG. 5 discussed above the electronic ink writing façade 500 can be relatively small as compared to the overall size of the display. These teachings will also accommodate, however, considerably larger electronic ink writing façades 500. This can include, for example, an electronic ink writing façade 500 that occupies at least fifty percent of the touch-sensitive surface or, even, as shown in FIG. 6, an electronic ink writing façade 500 that occupies substantially all of the touch-sensitive surface (i.e., more than ninety percent of the touch-sensitive surface).

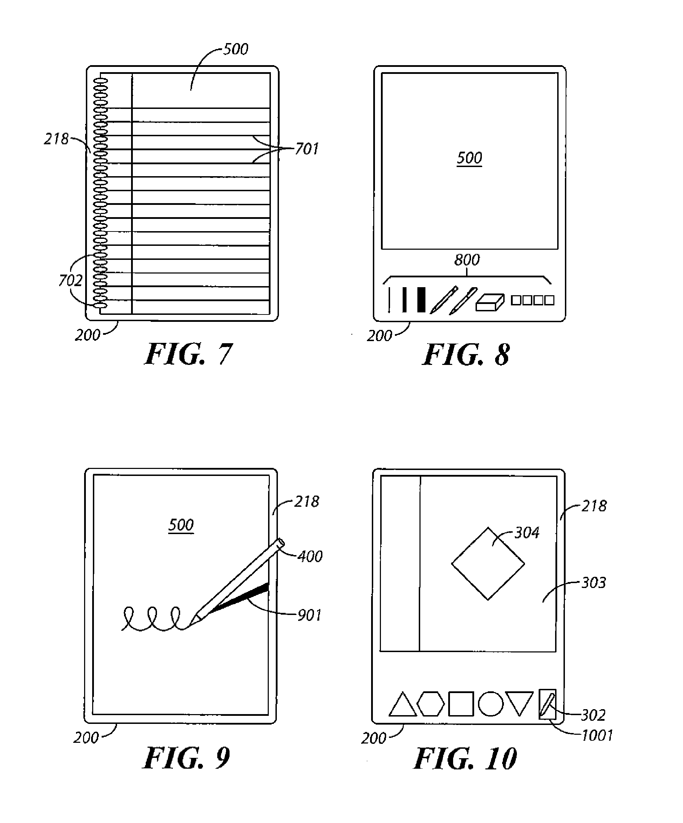

The representation of a sheet of paper as shown in FIG. 6 presents an unmarked and quite plain sheet of paper that lacks, for example, lines, holes, or any other sort of visual adornment. The present teachings are flexible in these regards, however, and will readily accommodate other practices. FIG. 7 provides one illustrative example in these regards. In this example, the sheet of paper that comprises the electronic ink writing façade 500 includes lines 701 and also includes a visual representation of a ring binding 702 along the left-side edge of the sheet of paper. Such accoutrements can help to visually cue the observer that the displayed surface is, in fact, a writing surface to thereby help to prompt an appropriate corresponding use of the stylus 400.

In some cases it may be that the control circuit 202 will interact in only a limited and pre-specified manner with manipulations of the stylus 400. The present teachings, however, will also accommodate a more flexible approach in these regards. For example, the user may be permitted to select various kinds of electronic ink to be applied when using the stylus on the electronic ink writing façade 500.

If desired, and as illustrated in FIG. 8, such an approach can include displaying on the touch-sensitive surface, along with the electronic ink writing façade 500, a listing 800 of selectable stylus options that the user can select, for example, by tapping on a corresponding icon. A non-exhaustive listing of such options can include various selectable line weights, pencil-like lines, ink-like lines, an eraser option, a variety of selectable electronic ink colors, and so forth.

By one approach such a listing 800 may be constantly present when also presenting the electronic ink writing façade 500. By another approach, such a listing 800 could be rendered visible and/or removed from view using any of a variety of signals or gestures. For example, a quick double tap on the touch-sensitive surface could serve to toggle between presenting and hiding such a listing 800.

If desired, and referring to FIG. 9, these teachings will also support having the control circuit 202 present on the electronic ink writing façade 500 a display of a stylus shadow 901 that tracks the movement of the stylus 400 with respect to the touch-sensitive surface. By one approach the location and angle of the shadow 901 can presume a predetermined location for a primary source of shadow-creating light. If desired, the location of this light (and hence the orientation of the shadow 901) can be rendered user selectable to thereby permit, for example, the source of light to appear to be selectively located on either the left side of the display or the right side of the display.

If desired, the present teachings can also be configured to automatically remove the electronic ink writing façade 500 from the display once the user has completed their ink-based entry. Such an action might be triggered, for example, when the user removes the stylus 400 from proximity to the touch-sensitive surface for more than some predetermined period of time such as two seconds, four seconds, ten seconds, and so forth. The user may also be permitted to remove the electronic ink writing façade 500 by offering some specific signal (such as, for example, a triple tap with the stylus in a specific corner of the touch-sensitive surface).

As shown in FIG. 10, upon removing the electronic ink writing façade 500 (either automatically or as a specific response to a user-entered signal) the control circuit 202 can return to an unabridged presentation of the application content 304. By one approach the aforementioned stylus icon 302 can also permit the user to again call up the now-hidden electronic ink writing façade 500 that corresponds to this particular application content 304.

If desired, such an icon 302 can include a particular embellishment 1001 (such as a representation of a sheet of paper that underlies a representation of a stylus) to indicate that this particular application (or application context/content, as desired) has a corresponding electronic ink writing façade 500 that includes user content. So configured, a user who returns to this particular application content in the future will be quickly and intuitively apprised of the availability of this electronic ink content. This informed user can then easily return that electronic ink content to the display (by, for example, bringing their stylus 400 proximal to the touch-sensitive surface and/or by tapping or otherwise selecting the corresponding icon 302).

So configured, an electronic device can readily offer both stylus-based and non-stylus-based modes of user interface in a manner that easily and intuitively permits the user to switch between such modes of content entry. These teachings are highly scalable and can be successfully employed with a variety of stylus types, electronic ink writing façade types, touch-sensitive surface sizes, and so forth.

The present disclosure may be embodied in other specific forms without departing from its essential characteristics. As one simple example in these regards, a control circuit 202 can be configured to not only detect the proximity of a stylus 400 but to also determine which of a plurality of different types of stylus 400 is being detected. This capability, in turn, can be leveraged to permit the control circuit 202 to present one kind of electronic ink writing façade 500 when working with a first type of stylus and to present a second, different kind of electronic ink writing façade 500 when working with a second, different type of stylus.

The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
by a control circuit (202) :
detecting (101) an initial interaction between a touch-sensitive surface (218) and a stylus (400);
in response to detecting the initial interaction between the touch-sensitive surface and the stylus, automatically displaying (104) a corresponding fresh electronic ink writing façade (500).

2. The method of claim 1 wherein detecting an initial interaction between the touch-sensitive surface and the stylus comprises detecting a non-touching interaction.

3. The method of claim 1 wherein the fresh electronic ink writing façade comprises a representation of an unmarked sheet of paper.

4. The method of claim 3 wherein the representation of the unmarked sheet of paper comprises a representation that occupies at least fifty percent of the touch-sensitive surface.

5. The method of claim 4 wherein the representation occupies substantially all of the touch-sensitive surface.

6. The method of claim 3 wherein the control circuit is further configured to also display on the touch-sensitive surface, along with the fresh electronic ink writing façade, content corresponding to a present user-interface context.

7. The method of claim 3 wherein the control circuit is further configured to also display on the touch-sensitive surface, along with the fresh electronic ink writing façade, a listing of selectable stylus options.

8. The method of claim 1 wherein automatically displaying the corresponding fresh electronic ink writing façade includes displaying a stylus shadow that tracks movement of the stylus with respect to the touch-sensitive surface.

9. The method of claim 1 wherein automatically displaying a corresponding fresh electronic ink writing façade comprises:
determining whether an electronic ink writing façade already exists for a presently-displayed context;
when an electronic ink writing façade already exists for the presently-displayed context, automatically displaying at least a portion of the already existing electronic ink writing façade; and
when an electronic ink writing façade does not already exist for the presently-displayed context, automatically displaying the corresponding fresh electronic ink writing façade.

10. An apparatus comprising:
a touch-sensitive display (218);
a stylus-proximity sensor (214);
a control circuit (202) operably coupled to the touch-sensitive display and the stylus-proximity sensor and being configured to:
use the stylus-proximity sensor to detect (101) an initial interaction between the touch-sensitive display and a stylus;
in response to detecting the initial interaction between the touch-sensitive display and the stylus, automatically displaying (104) on the touch-sensitive display a corresponding fresh electronic ink writing facade.

11. The apparatus of claim 10 wherein the control circuit is configured to detect the initial interaction between the touch-sensitive display and the stylus by detecting a non-touching interaction.

12. The apparatus of claim 10 wherein the fresh electronic ink writing façade comprises a representation of an unmarked sheet of paper.

13. The apparatus of claim 12 wherein the representation of the unmarked sheet of paper comprises a representation that occupies at least fifty percent of the touch-sensitive display.

14. The apparatus of claim 12 wherein the control circuit is further configured to also display on the touch-sensitive display, along with the fresh electronic ink writing façade, content corresponding to a present user-interface context.

15. The apparatus of claim 12 wherein the control circuit is further configured to also display on the touch-sensitive display, along with the fresh electronic ink writing façade, a listing of selectable stylus options.

16. The apparatus of claim 10 wherein the control circuit is further configured to automatically display on the electronic ink writing facade a stylus shadow that tracks movement of the stylus with respect to the touch-sensitive display.

## Amended claims

### Amended claims in accordance with Rule 137(2) EPC.

**1.** A method comprising:
by a control circuit (202):
detecting (101) an initial non-touching interaction between a touch-sensitive surface (218) and a stylus (400);
in response to detecting the initial non-touching interaction between the touch-sensitive surface and the stylus, automatically displaying (104) a corresponding fresh electronic ink writing façade (500).

**2.** The method of claim 1 wherein the fresh electronic ink writing façade comprises a representation of an unmarked sheet of paper.

**3.** The method of claim 2 wherein the representation of the unmarked sheet of paper comprises a representation that occupies at least fifty percent of the touch-sensitive surface.

**4.** The method of claim 3 wherein the representation occupies substantially all of the touch-sensitive surface.

**5.** The method of claim 2 wherein the control circuit is further configured to also display on the touch-sensitive surface, along with the fresh electronic ink writing façade, content corresponding to a present user-interface context.

**6.** The method of claim 2 wherein the control circuit is further configured to also display on the touch-sensitive surface, along with the fresh electronic ink writing façade, a listing of selectable stylus options.

**7.** The method of claim 1 wherein automatically displaying the corresponding fresh electronic ink writing façade includes displaying a stylus shadow that tracks movement of the stylus with respect to the touch-sensitive surface.

**8.** The method of claim 1 wherein automatically displaying a corresponding fresh electronic ink writing façade comprises:
determining whether an electronic ink writing façade already exists for a presently-displayed context;
when an electronic ink writing façade already exists for the presently-displayed context, automatically displaying at least a portion of the already existing electronic ink writing façade; and
when an electronic ink writing façade does not already exist for the presently-displayed context, automatically displaying the corresponding fresh electronic ink writing façade.

**9.** An apparatus comprising:
a touch-sensitive display (218);
a stylus-proximity sensor (214);
a control circuit (202) operably coupled to the touch-sensitive display and the stylus-proximity sensor and being configured to:
use the stylus-proximity sensor to detect (101) an initial non-touching interaction between the touch-sensitive display and a stylus;
in response to detecting the initial non-touching interaction between the touch-sensitive display and the stylus, automatically displaying (104) on the touch-sensitive display a corresponding fresh electronic ink writing facade.

**10.** The apparatus of claim 9 wherein the fresh electronic ink writing façade comprises a representation of an unmarked sheet of paper.

**11.** The apparatus of claim 10 wherein the representation of the unmarked sheet of paper comprises a representation that occupies at least fifty percent of the touch-sensitive display.

**12.** The apparatus of claim 10 wherein the control circuit is further configured to also display on the touch-sensitive display, along with the fresh electronic ink writing façade, content corresponding to a present user-interface context.

**13.** The apparatus of claim 10 wherein the control circuit is further configured to also display on the touch-sensitive display, along with the fresh electronic ink writing façade, a listing of selectable stylus options.

**14.** The apparatus of claim 9 wherein the control circuit is further configured to automatically display on the electronic ink writing facade a stylus shadow that tracks movement of the stylus with respect to the touch-sensitive display.
